# EUROPEAN PATENT SPECIFICATION

(11) **EP 2 327 613 B1**
(45) Date of publication and mention of the grant of the patent: **24.04.2013**
(21) Application number: 10186983.2
(22) Date of filing: 08.10.2010
(51) Int. Cl.: B62J 6/00, B60K 37/02

(54) **Warning lamp device for vehicles**
Warnlampevorrichtung für Fahrzeuge
Dispositif de lampe témoing pour véhicules

(30) Priority: 27.11.2009 JP 2009270083
(43) Date of publication of application: 01.06.2011
(73) Proprietor: Honda Motor Co., Ltd., Minato-ku Tokyo 107-8556 (JP)
(72) Inventor: Ochiai, Kazuyuki, Wako-shi Saitama 351-0193 (JP); Takahashi, Hideo, Wako-shi Saitama 351-0193 (JP)
(74) Representative: Beder, Jens

(56) References cited:
- US-A1- 2001 026 217
- US-A1- 2005 253 409
- US-A1- 2007 045 292

## Description

The present invention relates to a warning lamp device for vehicles.

Some motorcycle meters include various warning lamps incorporated therein. Normally, a warning lamp is de-energized, and it is energized only in the event of a related failure. When a warning lamp is de-energized due to a failure of its own, it is hardly recognizable by the motorcycle rider. A warning lamp incorporated in a meter shares a power supply with the meter. When the power supply of the warning lamp is shut down, the meter is de-energized and hence does not display its indications. Therefore, the motorcycle rider finds it easy to recognize the failure of the power supply of the warning lamp (see Patent document 1).
[Patent Document 1]
Japanese Patent Laid-open No. Hei 10-40479

US 2001/0026217 is an US-Document in accordance with the preamble of claim 1.

There are situations in which a meter and a group of warning lamps need to be separate from each other in favor of layout freedom, parts versatility, and design needs. However, if the power supply of the warning lamps is simply separate from the power supply of the meter, then when the power supply of the warning lamps is shut down, the warning lamps fail to operate, but the meter still displays its indications normally, making the shutdown of the power supply of the warning lamps unrecognizable by the motorcycle rider.

It is an object of the present invention to provide a warning lamp device for vehicles which makes it easy to recognize a power supply failure of a warning lamp that is positioned in a location different from a meter with the power supply of the warning lamp being separate from the power supply of the meter.

To achieve the above object, the invention recited in claim 1 relates to a warning lamp device for a vehicle having a warning lamp (e.g. an oil pressure warning lamp 107, a coolant temperature warning lamp 110, an FI warning lamp 112, an ABS warning lamp 106, a neutral lamp 109, a right turn signal lamp 105, a high beam warning lamp 108 in the embodiment) for detecting a state of a vehicle (e.g. a vehicle 1 in the embodiment) and giving a warning when necessary, wherein the warning lamp is disposed separately from a meter (e.g. a meter unit 37 in the embodiment), a warning lamp power terminal (e.g. lamp power terminal IGN+1 in the embodiment) for supplying electric power to the warning lamp, and a meter power terminal (e.g. a meter power terminal IGN+2 in the embodiment), connected between the warning lamp power terminal and the warning lamp, for supplying electric power to the meter, are provided, and the meter is supplied with electric power through the meter power terminal.

The invention recited in claim 2 is characterized in that the warning lamp is combined with a ground terminal (e.g. a ground terminal GND1 in the embodiment) and a meter ground terminal (e.g. meter ground terminal GND2 in the embodiment), connected between the ground terminal and the warning lamp, for grounding the meter, the meter being grounded through the meter ground terminal.

The invention recited in claim 3 is characterized in that the warning lamp is combined with a detecting device connection terminal (e.g. a oil pressure switch connection terminal 145, a coolant temperature connection terminal 146, a FI connection terminal 147, a ABS unit connection terminal 157, a neutral switch connection terminal 148, a right turn switch connection terminal 152, a left turn switch connection terminal 153, a high beam switch connection terminal 154 in the embodiment) connected to a state detecting device (e.g. a oil pressure switch 141, a coolant meter 139, a FI unit 111, a ABS unit 113, a neutral switch 144, a right turn switch 149, a left turn switch 150, and a high beam switch 151 in the embodiment) for detecting a state of the vehicle through the warning lamp.

The invention recited in claim 4 is characterized in that the warning lamp device includes a pilot box (e.g. a pilot box 104 in the embodiment) housing a plurality of warning lamps therein.

The invention recited in claim 5 is characterized in that the warning lamp includes an ABS warning lamp (e.g. an ABS warning lamp 106 in the embodiment) for producing a warning with respect to an antilock brake system (e.g. an ABS unit 113 in the embodiment) of the vehicle.

The invention recited in claim 6 is characterized in that the warning lamp includes a warning lamp for producing a warning with respect to an engine operating state of the vehicle including an engine oil pressure, an engine coolant temperature, a fuel injection device, or the like.

The invention recited in claim 7 is characterized in that the meter includes at least one of an electric speedometer (e.g. an electric speedometer 82 in the embodiment) an electric tachometer (e.g. an electric tachometer 81 in the embodiment) and a liquid-crystal meter (e.g. a liquid-crystal clock 83, a digital liquid-crystal mileage meter 84, and a tripmeter 85 in the embodiment).

The invention recited in claim 8 is characterized in that the meter is mounted on a meter panel (e.g. a meter panel 90 in the embodiment), and the pilot box is disposed on an upper end of a front portion of the meter panel separately from the meter.

The invention recited in claim 9 is characterized in that the warning lamp includes an LED (e.g. an LED 118 in the embodiment) mounted on a printed-circuit board (e.g. a printed-circuit board 117 in the embodiment), and the printed-circuit board is coated with a black coat layer (e.g. a black coat layer 119 in the embodiment).

In the invention of claim 1, the warning lamp is disposed separately from the meter. As a result, parts versatility is enhanced, greater layout freedom is achieved especially in motorcycles, and design needs can be met more easily. If electric power is not supplied to warning lamps due to a connection failure in the power side of the warning lamp, it is impossible to prompt the rider of the motorcycle 1 through energized warning lamp. In this case, however, since the meter is not also supplied with electric power, the electric meters or characters are not displayed, so that the rider of the motorcycle 1 can confirm the failure through the meter. Therefore, the rider of the motorcycle 1 can quickly confirm the fact that the warning lamps are not supplied with electric power.
In the invention of claim 2, in the case where the grounding for the warning lamp cannot be made due to a connection failure in the ground side of the warning lamp, it is impossible to prompt the rider of the motorcycle 1. In this case, however, since the grounding for the meter is not also made and the meter is not supplied with electric power, the electric meters or characters are not displayed, so that the rider of the motorcycle 1 can confirm the failure through the meter. Therefore, the rider of the motorcycle 1 can quickly confirm the fact that the warning lamps are not supplied with electric power.
In the invention of claim 3, the rider of the motorcycle 1 can confirm the failure of the state detecting device through energized warning lamp.
In the invention of claim 4, the power supply and the grounding for the meter is established through the power supply and the grounding for the warning lamp in the pilot box.
In the invention of claim 5, the power supply for the meter can be made through the power supply and the grounding for the antilock brake system, thereby setting the grounding for the meter. Therefore, even in the case of a connection failure at the power supply and the grounding for an antilock brake system, the rider of the motorcycle 1 can confirm the failure through the meter.
In the invention of claim 6, connection failures in the power side and the ground side the warning lamps can be confirmed by indications and characters on the meter.
In the invention of claim 7, the rider of the motorcycle 1 can confirm the failure of the warning lamp through the electric speedometer, the electric tachometer and the liquid-crystal meter, which are appealing to the eye.
In the invention of claim 8, the power supply and the grounding for the meter are made through the pilot box. Thus, a specific warning lamp in the pilot box can be given a priority and the rider of the motorcycle 1 can confirm the failure of the meter.
In the invention of claim 9, even if there are sunlight reflections from the printed-circuit board, the warning lamps can easily be recognized when they are energized and de-energized.
Fig. 1 is a side elevational view of a motorcycle according to an embodiment of the present invention.
Fig. 2 is a fragmentary front elevational view of the motorcycle shown in Fig. 1.
Fig. 3 is a side elevational view of the motorcycle shown in Fig. 2 with a front cowl removed.
Fig. 4 is a front elevational view of the motorcycle shown in Fig. 2 with a front cowl removed.
Fig. 5 is a front elevational view of a meter unit.
Fig. 6 is a sectional side elevational view of the meter unit shown in Fig. 5.
Fig. 7 is a fragmentary cross-sectional view taken along line A - A of Fig. 5, showing a mounted state of the meter unit.
Fig. 8 is a fragmentary cross-sectional view taken along line B - B of Fig. 5, showing a mounted state of a meter panel.
Fig. 9 is a front elevational view of the meter panel.
Fig. 10 is a side elevational view of the meter panel.
Fig. 11 is a view showing a mounted state of the meter panel.
Fig. 12 is a front elevational view of a pilot box.
Fig. 13 is a sectional side elevational view of the pilot box shown in Fig. 12.
Fig. 14 is a circuit diagram of an electric circuit including the meter unit and the pilot box.

An embodiment of the present invention will be described below with reference to the drawings. In the drawings, the arrow FR represents a forward direction of the motorcycle, the arrow LH represents a leftward direction of the motorcycle, and the arrow UP represents an upward direction of the motorcycle.

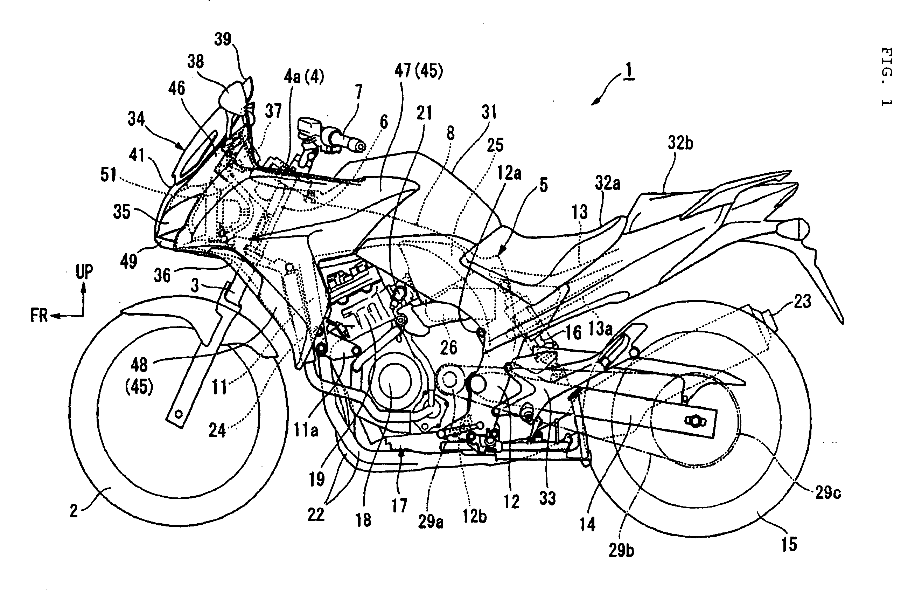

As shown in Fig. 1, a motorcycle 1 has a front wheel 2 rotatably supported on the lower ends of a pair of left and right front fork members 3. The front fork members 3 have respective upper portions steerably pivoted on a head pipe 6 of a motorcycle frame 5 by a steering stem 4. The steering stem 4 includes a top bridge 4a on which a bar handle 7 is mounted.

The motorcycle frame 5 is of a so-called mono-backbone structure made up of a plurality of steel members or cast members that are integrally joined together. The motorcycle frame 5 includes, as a main component, a main frame 8 extending rearwardly from an upper portion of the head pipe 6 and then extending downwardly in a curved configuration. The main frame 8 and the head pipe 6 are disposed centrally in the widthwise direction of the motorcycle 1.
A pair of left and right engine hangers 11 spaced apart from each other extends obliquely downwardly from a rear portion of the head pipe 6.

A pair of left and right pivot brackets 12 is mounted on a lower side of a rear portion of the main frame 8. A seat rail 13 and a support pipe 13a therefor have front ends mounted on an upper side of the rear portion of the main frame 8.
Swing arms 14 have front ends swingably pivoted on the respective pivot brackets 12, and a rear wheel 15 is rotatably supported on the rear ends of the swing arms 14. A rear cushion 16 is interposed between front portions of the swing arms 14 and a curved portion of the main frame 8.

A parallel four-cylinder engine 17 having a crankshaft whose rotational axis extends in the widthwise direction of the motorcycle 1 is installed below the main frame 8. The engine 17 includes a crankcase 18 and cylinders 19 disposed on the crankcase 18 and extending obliquely forwardly and upwardly. Throttle bodies 21 are connected to respective rear portions of the cylinders 19. Exhaust pipes 22 are connected to respective front portions of the cylinders 19.

An air cleaner case 25 is connected to rear sides of the throttle bodies 21. The reference numeral 26 denotes an intake duct which extend along a left side of the air cleaner case 25 and which is open rearwardly of the motorcycle 1.
Exhaust pipes 22 are curved in front of the engine 17 and extend to a position below the crankcase 18. The exhaust pipes 22 are joined into a single exhaust pipe which houses an emission catalyst therein and which is connected to a silencer 23 disposed on the right side of a rear portion of the motorcycle 1. A radiator 24 for cooling the engine is disposed in front of the cylinders 19.

The crankcase 18 has a front portion whose upper side is supported by a support plate 11a on a lower portion of each of the engine hangers 11, and a rear portion whose upper and lower sides are supported respectively by upper and lower supports 12a, 12b near the pivot brackets 12.

Rotational drive power from the engine 17 is output through a clutch mechanism and a transmission, not shown, to a drive sprocket 29a on a left side of a rear portion of the crankcase 18, and then transmitted to the rear wheel 15 through a drive chain 29b and a driven sprocket 29c.
Above the engine 17, there is disposed a fuel tank 31 across the main frame 8. The fuel tank 31 is positioned in front of a rider's seat 32a and a rear passenger's seat 32b juxtaposed in front and rear positions on the seat rail 13. Step brackets 33 which support a rider's step and a rear passenger's step in front and rear positions have front ends mounted on rear portions of the pivot brackets 12.

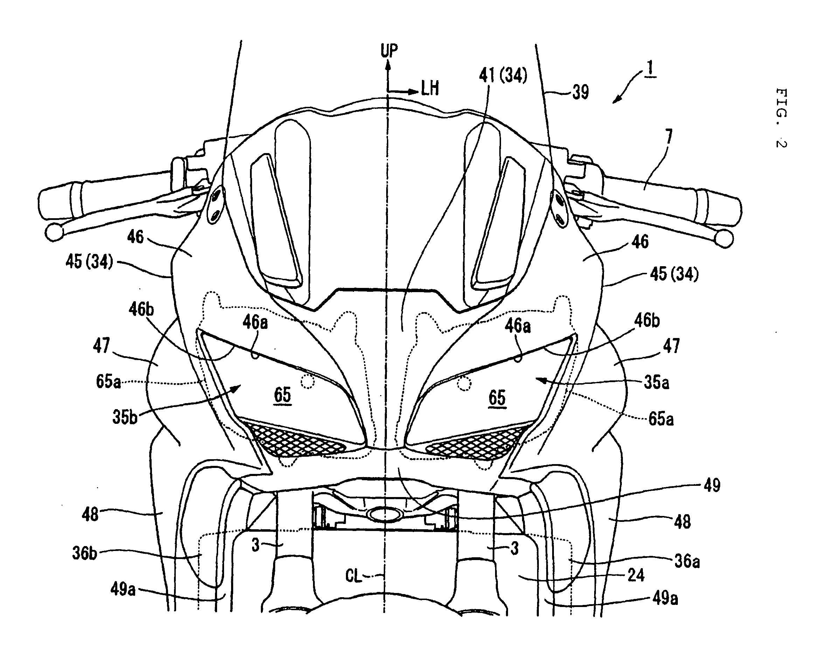

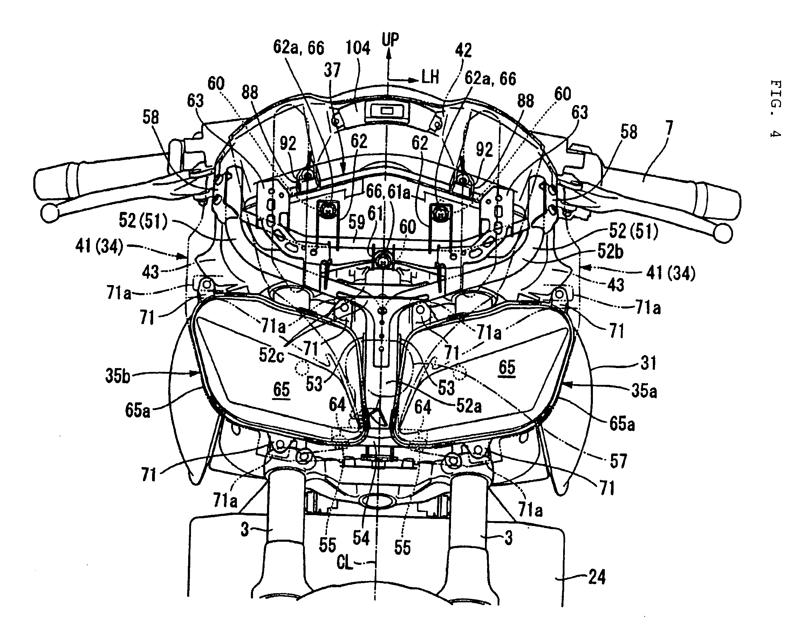

As shown in Figs. 2 through 4, a front cowl 34 covering the head pipe 6 and nearby parts at their front and both sides is mounted on a front portion of the motorcycle 1. The front cowl 34 is made of synthetic resin and has a nose shape pointing forwardly and downwardly on an upper side of a front end portion of the motorcycle 1. The front cowl 34 mainly includes a front center cowl 41 serving as a central portion in the widthwise direction of the motorcycle 1 on the upper side of the front end portion of the motorcycle 1 and left and right front side cowls 45 serving as left and right side portions on the front portion of the motorcycle 1. A front screen 39 made of transparent or translucent synthetic resin is mounted on a front side of an upper portion of the front center cowl 41. In Figs. 2 and 4, CL denotes a central line of the motorcycle 1.

Left and right headlights 35a, 35b are disposed on a front end portion of the front cowl 34. Front winkers 36a, 36b are disposed on upper portions of the front edges of downward extensions 48 of the left and right front side cowls 45. A meter unit 37 having various indicators is disposed on an inner side (rear side) of an upper portion of the front cowl 34. Rearview mirrors 38 (see Fig. 1) are disposed on both left and right sides of an upper portion of the front cowl 34.

The front center cowl 41 has an outer face forming portion 42 extending from between the left and right headlights 35a, 35b and spreading to a greater width in an upward direction, and left and right covers 43 curved from both left and right sides of the outer face forming portion 42 obliquely rearwardly and outwardly. The outer face forming portion 42 is curved so as to be convex outwardly (obliquely upwardly and forwardly) over an upper front surface of the front cowl 34. The left and right covers 43 have respective lower portions shaped as frames for allowing lens surfaces 65 of the left and right headlights 35a, 35b to face forwardly of the motorcycle 1. The left and right covers 43 are covered with front faces 46 of the left and right front side cowls 45 which are superposed on the left and right covers 43 over their obliquely front outer sides.

The left and right front side cowls 45 have respective front faces 46 contiguous to the front center cowl 41, respective rear extensions 47 extending rearwardly from outer side edges of the front faces 46, and lower extensions 48 extending downwardly from lower edges of longitudinally central portions of the rear extensions 47. The left and right front faces 46 have respective substantially triangular recesses 46a defined therein which have outer edges slanted as viewed in front elevation so as to match upper and outer side edges of the lens surfaces 65 of the left and right headlights 35a, 35b. The rear extensions 47 extend rearwardly to cover upper portions of the front fork members 3 and a front portion of the fuel tank 31 over their outer sides in the widthwise direction of the motorcycle 1. The lower extensions 48 extend downwardly to cover the radiator 24 positioned downwardly and rearwardly of the front fork members 3 over its outer sides in the widthwise direction of the motorcycle 1.

A cowl extension 49 extends between lower portions of the left and right front faces 46 below the outer side edges of the recesses 46a. The cowl extension 49 has a central portion in the widthwise direction of the motorcycle 1, and the front center cowl 41 has a central portion in the widthwise direction of the motorcycle 1 which has a lower end connected downwardly to the central portion of the cowl extension 49. The central portion of the front center cowl 41 in the widthwise direction of the motorcycle 1 has opposite side edges matching the respective inner side edges of the lens surfaces 65 of the left and right headlights 35a, 35b. The cowl extension 49 has left and right sides whose upper edges match the respective lower edges of the lens surfaces 65 of the left and right headlights 35a, 35b. The front center cowl 41, the cowl extension 49, and the left and right front side cowls 45 jointly define openings 46b through which the lens surfaces 65 of the left and right headlights 35a, 35b are exposed forwardly of the motorcycle 1. Cowl side inner members 49a are joined to both sides of a lower portion of the cowl extension 49. The cowl side inner members 49a extend along front edges of the downward extensions 48 of the front side cowls 45 and function as a radiator shroud.

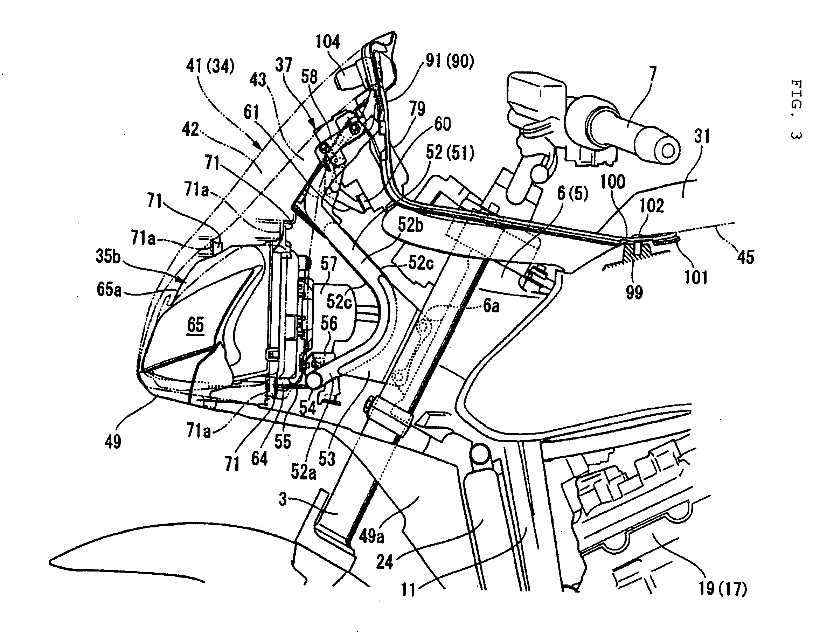

As shown in Figs. 3 and 4, the front cowl 34 has a front portion supported, together with the headlights 35a, 35b, the front winkers 36a, 36b, the rearview mirrors 38, and the meter unit 37, on the head pipe 6 by a cowl stay 51. The front cowl 34 has both left and right sides supported on the motorcycle frame 5 by unshown side frames or the like.

The cowl stay 51 is made up of a plurality of steel members that are integrally joined together by welding or the like, and includes a pair of left and right stay members 52 in the form of round steel pipes bent into a substantially crank shape as viewed in side elevation. The left and right stay members 52 are symmetrical in shape, and have respective lower stay portions 52a adjacent to each other in the widthwise direction of the motorcycle 1 in front of the head pipe 6 and upper stay portions 52b extending upwardly from the lower stay portions 52a and spreading away from each other obliquely outwardly in the widthwise direction of the motorcycle 1. The lower stay portions 52a are integrally joined to each other together with gusset plates 52c by welding or the like. The cowl stay 51 is substantially Y-shaped as viewed in front elevation.

The left and right lower stay portions 52a of the cowl stay 51 are of an arcuate shape which is convex rearwardly as viewed in side elevation. A pair of left and right pivot plates 53 are joined respectively to rear sides of the left and right lower stay portions 52a. The left and right pivot plates 53, which sandwich therebetween a fastening portion 6a projecting from a front end portion of the head pipe 6, are integrally tightened to each other by a pair of upper and lower bolts or the like, thus securing the cowl stay 51 to the front end portion of the head pipe 6.

A lower cross pipe 54 in the form of a round steel pipe which is of substantially the same diameter as the stay members 52 is joined to the front ends of lower portions of the left and right lower stay portions 52a. The lower cross pipe 54 is straight and extends laterally, and has both left and right sides whose lower ends are joined to rear ends of left and right supports 55 which are in the form of flat plates lying substantially perpendicular to the vertical direction and extending forwardly. A vacuum tank bracket 56 for mounting a vacuum tank 57 which serves as an intake system component of the engine 17, and a horn bracket for mounting a horn (alarm whistle), not shown, are integrally joined to the left and right lower stay portions 52a near the front ends of the lower portions thereof.
Left and right mirror brackets 58 for mounting the left and right mirrors are integrally joined respectively to the outer sides of upper portions of the left and right upper stay portions 52b of the cowl stay 51.

An upper cross pipe 59 in the form of a round steel pipe which is of a diameter smaller than the stay members 52 extends between the upper portions of the left and right upper stay portions 52b in the widthwise direction of the motorcycle 1. The upper cross pipe 59 is of a slightly curved shape whose left and right ends are bent somewhat obliquely upwardly and outwardly as viewed in front elevation.
A lower meter bracket 61 is integrally joined to the front side of an intermediate portion of the upper cross pipe 59 and extends obliquely rearwardly and downwardly. Left and right upper meter brackets 62 which project upwardly on both sides of the lower meter bracket 61 are also integrally joined to the front side of the intermediate portion of the upper cross pipe 59.

Left and right screen brackets 63 have base portions joined to and lying over the left and right upper stay portions 52b and the left and right side portions of the upper cross pipe 59. The left and right screen brackets 63 have upper end portions extending upwardly between the left and right upper stay portions 52b and the left and right side portions of the upper cross pipe 59.
The meter brackets 61, 62 on the upper cross pipe 59 have fastening holes defined therein through which bosses 61a, 62a projecting from the reverse side of the meter unit 37 extend. The bosses 61a, 62a are fastened in place by tapping screws 66 with resilient members 60 interposed therebetween.

An adjuster unit (not shown) for manually or electrically adjusting the height of the front screen 39 has left and right sides fastened to the respective left and right screen brackets 63. The left and right headlights 35a, 35b have respective inner sides in the widthwise direction of the motorcycle 1 which have rear lower sides supported on the left and right supports 55 of the lower cross pipe 54 with resilient members 64 of synthetic rubber or the like interposed therebetween.

The left and right headlights 35a, 35b have respective lamp cases 65a through which the lens surfaces 65 are exposed. The lamp cases 65a each have two upper brackets 71 and one lower bracket 71. These brackets 71 are fixed to mounts 71a of the front cowl 34 and the cowl stay 51, thereby securing the left and right headlights 35a, 35b to the front cowl 34 and the cowl stay 51.

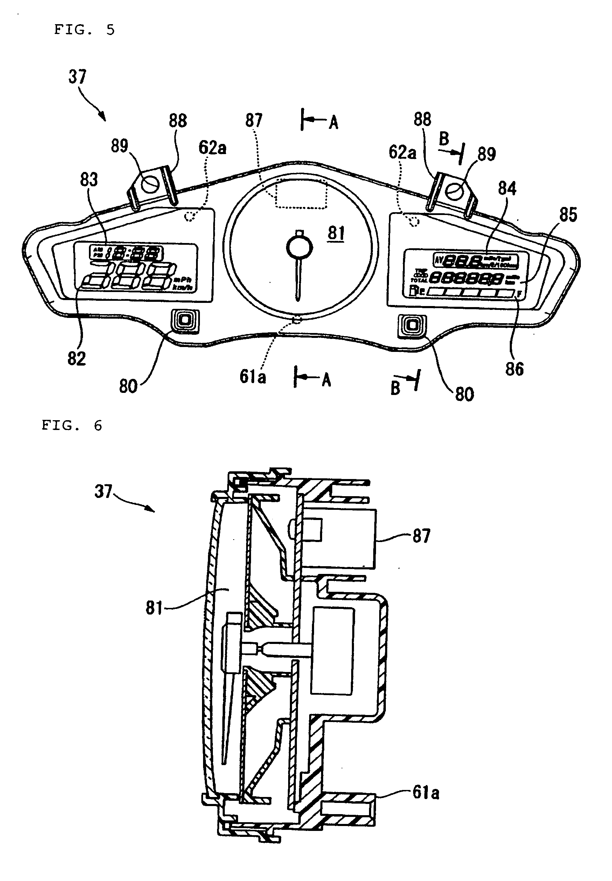

As shown in Figs. 5 and 6, the meter unit 37 is elongate in the widthwise direction of the motorcycle 1 and has an upwardly convex upper edge as viewed in plan. The meter unit 37 has a lower edge shaped to have slightly outwardly protruding regions where a pair of left and right rubber switches 80 are disposed. The meter unit 37 includes a circular analog electric tachometer 81 disposed centrally therein, a digital electric speedometer 82 on the left side of the tachometer 81, and a liquid-crystal clock 83 disposed above the speedometer 82 in adjacent relation thereto. The meter unit 37 also includes a digital liquid-crystal mileage meter 84, a tripmeter 85, and a bar-indicator-type fuel gage 86, which are arranged successively downwardly, on the right side of the tachometer 81. The rubber switches 80 are disposed at inner positions below the speedometer 82 and the fuel gage 86, respectively. The meter unit 37 incorporates an illumination device such as a backlight for increased visibility of displayed information.

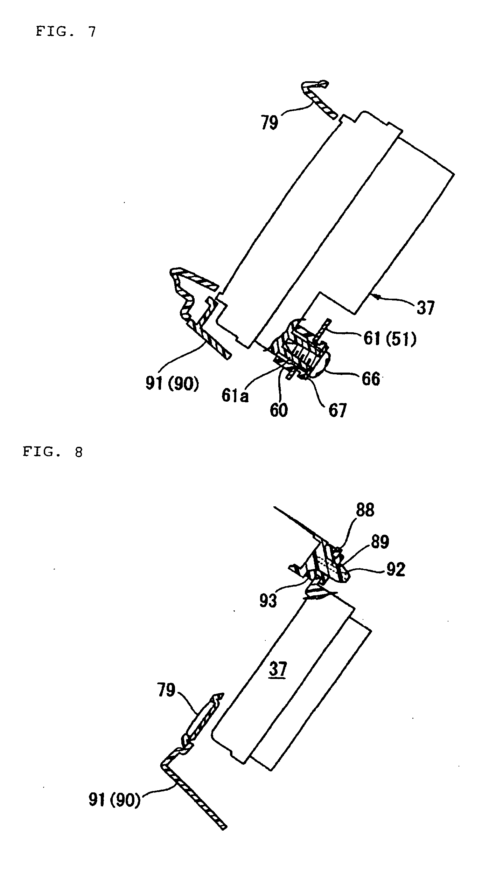

As described above, the bosses 62a, 61a inserted through the fastening holes that are defined in the left and right upper meter brackets 62 and the lower meter bracket 61 of the cowl stay 51 are disposed on the reverse side of the meter unit 37. Specifically, the lower meter bracket 61 is shown in Fig. 7. The tapping screw 66 is tightened into the boss 61a with the tubular resilient member 60 interposed therebetween, securing the meter unit 37 to the cowl stay 51. In Fig. 7, the reference numeral 67 denotes a washer.
A connector joint 87 is also disposed on the reverse side of the meter unit 37. The meter unit 37 has a pair of left and right arms 88 mounted on a front edge thereof and having respective fitting holes 89 defined therein. As shown in Fig. 8, a pair of left and right clips 92 on the reverse side of a front face 91 of a meter panel 90, to be described later, are fitted in the respective fitting holes 89 with resilient members 93 interposed therebetween. In Figs. 7 and 8, the meter panel 90 and a garnish 79 are shown as mounted in place.

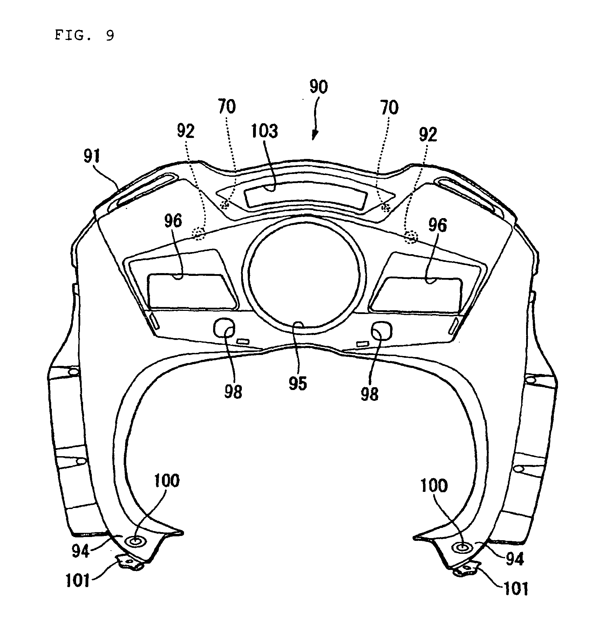

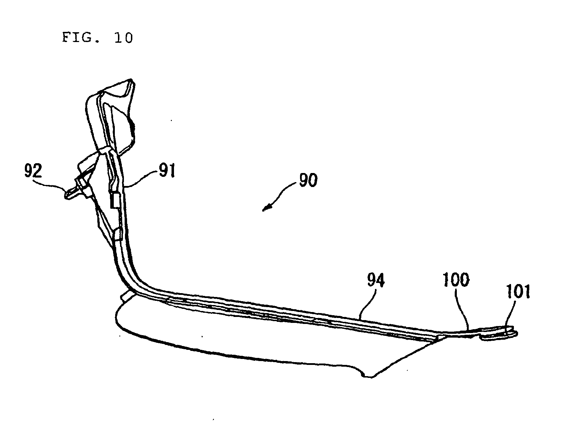

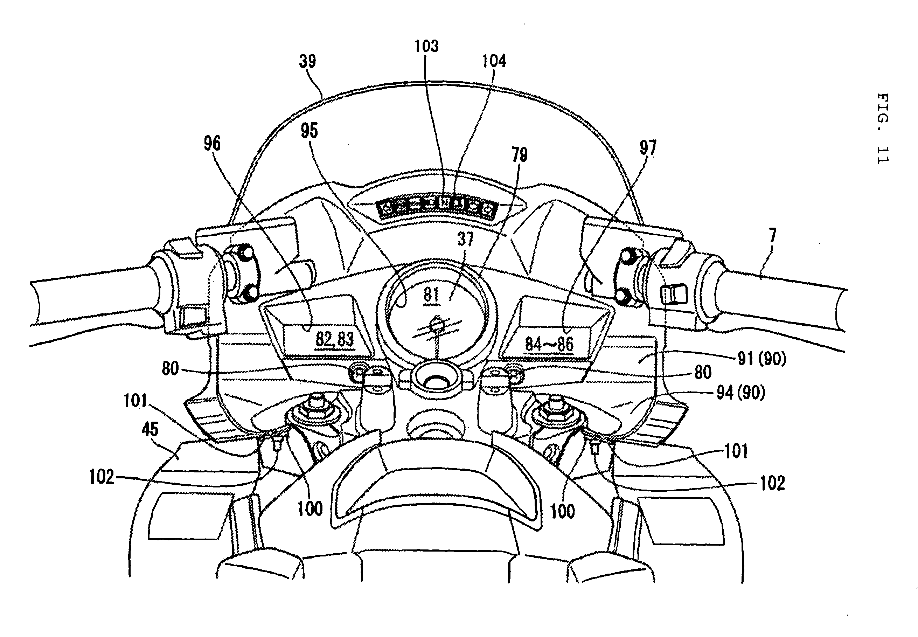

As shown in Figs. 9 through 11, the meter panel 90 extends between an upper side of the meter unit 37 and the fuel tank 31.
The meter panel 90 includes a front face 91 rising on the reverse side (behind) the front screen 39 in confronting relation to the rider of the motorcycle 1, and an extension 94 bent from the both sides of a lower portion of the front face 91 substantially perpendicularly to the front face 91 and extending to the fuel tank 31 in a rear position. The front face 91 of the meter panel 90 has a central opening 95 defined therein through which the tachometer 81 of the meter unit 37 is exposed, a left opening 96 defined therein on the left side of the central opening 95 and through which the speedometer 82 and the clock 83 of the meter unit 37 are exposed, and a right opening 97 defined therein on the right side of the central opening 95 and through which the mileage meter 84, the tripmeter 85, and the fuel gage 86 are exposed. The front face 91 also has openings 98 defined therein below the right opening 97 and the left opening 96 and through which the rubber switches 80 of the meter unit 37 are exposed. As shown in Fig. 7, the garnish 79 is mounted in a region extending around the central opening 95 and over the openings 98.

The clips 92 are disposed on the reverse side of the front face 91 of the meter panel 90. The clips 92 are inserted and fitted in the respective left and right arms 88 of the meter unit 37, thereby securing the front face 91 to the meter unit 37. As also shown in Fig. 3, the extension 94 of the meter panel 90 has mount holes 100 defined therein to be secured to mount seats 99 on upper surfaces of both sides of the fuel tank 31 and mount members 101 for being mounted on the front side cowls 45, the mount holes 100 and the mount members 101 being positioned on ends of the extension 94. The mount holes 100 are secured to the mount seats 99 of the fuel tank 31 by clips 102, and the mount members 101 are fixed to the front side cowls 45.

The meter panel 90 includes a pilot box opening 103 defined in the upper end of a front portion thereof, or specifically above the central opening 95. The pilot box opening 103 is of a laterally elongate shape extending arcuately forwardly. A pilot box 104 is mounted in the pilot box opening 103. Therefore, the pilot box 104 is disposed separately from the meter unit 37. As the pilot box 104 is disposed in the upper end of the meter panel 90 separately from the meter unit 37, the visibility of the pilot box 104 is increased.

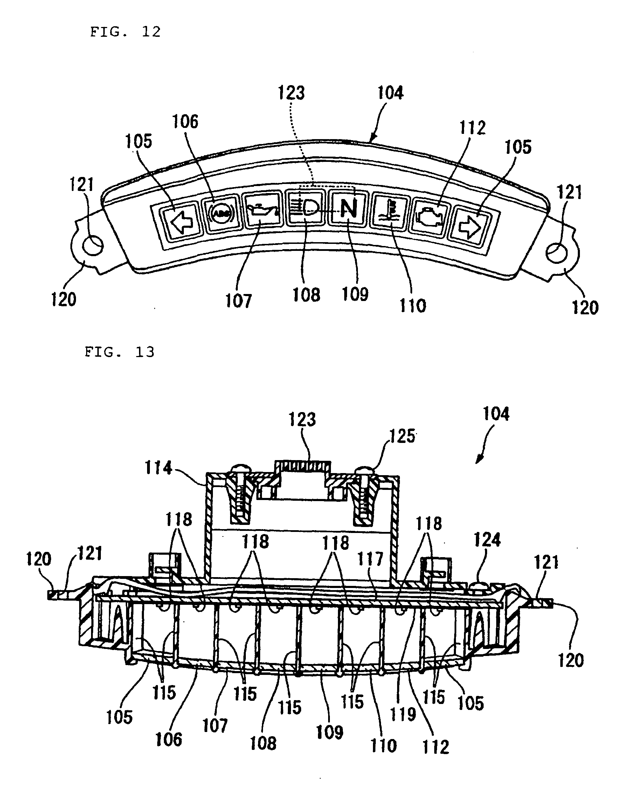

As shown in Figs. 12 and 13, the pilot box 104 has an array of warning lamps along the widthwise direction of the motorcycle 1. These warning lamps are energized to give warnings to the rider depending on detected states of the motorcycle 1. Specifically, the pilot box 104 includes left and right turn signal lamps 105 on its opposite ends which are in the shapes of arrow marks and are turned on in ganged relation to the left and right front winkers 36a, 36b.

The pilot box 104 also includes, inwardly of the left and right turn signal lamps 105, an ABS warning lamp 106 which is turned on to give a warning about a driving state when an ABS (Antilock Brake System) unit 113 is detected as suffering a failure, an oil pressure warning lamp 107 which is turned on to give a warning about a driving state when the pressure of working oil is detected as suffering a failure, a high beam warning lamp 108 which is turned on to give a warning when the headlights 35a, 35b are in a high beam mode, a neutral lamp 109 which is turned on when the transmission is in a neutral gear position, a coolant temperature warning lamp 110 which is turned on to give a warning about a driving state when the temperature of the coolant of the engine is higher than a prescribed level, and an FI warning lamp 112 which is turned on to give a warning about a driving state when an FI unit 111 as a fuel injection device is detected as suffering a failure, the lamps being successively arranged in the order named from the left.

The pilot box 104 has a case 114 to which there are fastened by screws 124 lens sections 116 divided by partitions 115 in alignment with the left and right turn signal lamps 105, the ABS warning lamp 106, the oil pressure warning lamp 107, the high beam warning lamp 108, the neutral lamp 109, the coolant temperature warning lamp 110, and the FI warning lamp 112. The case 114 includes a printed-circuit board 117 on which LEDs 118 are mounted as the warning lamps. The printed-circuit board 117 has a surface coated with a black coat layer 119 which makes the surface of the printed-circuit board 117 less visible from outside of the lens sections 116.

The case 114 has mount arms 120 on both ends thereof for being mounted on the reverse sides of mount bosses 70 of the front face 91 of the meter panel 90. The mount arms 120 have mount holes 121 defined therein, and the pilot box 104 is fastened to the meter panel 90 by tapping screws 122 threaded into the mount holes 121, the pilot box 104 being exposed through the pilot box opening 103. A connector joint 123 is fixed to the reverse side of the case 114 by screws 125.

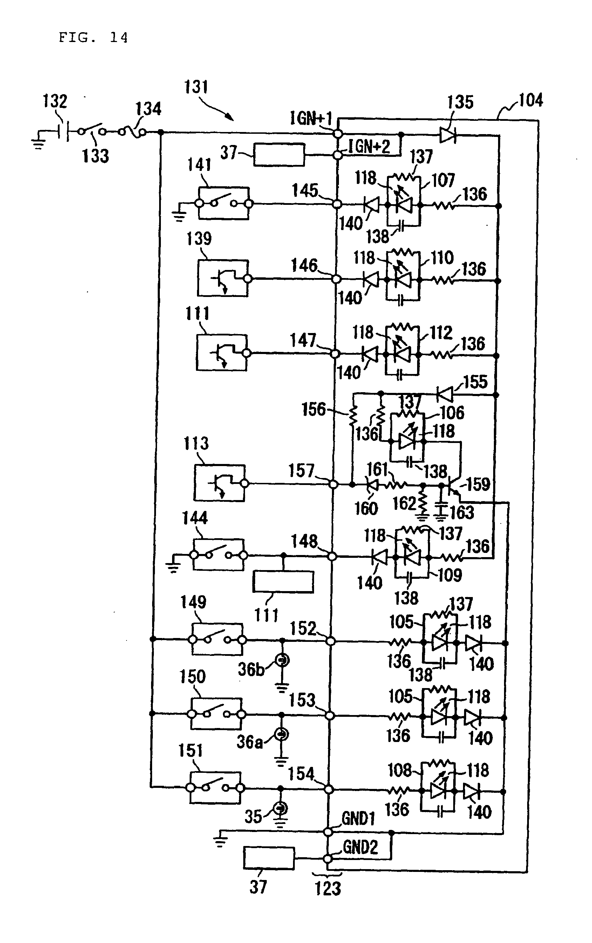

Fig. 14 shows an electric circuit 131 including the meter unit 37 and the pilot box 104. A battery 132 as a power supply is connected successively to an ignition switch 133 and a fuse 134 to which there is connected in series a backflow prevention diode 135 through a lamp power terminal IGN+1 of the pilot box 104. The backflow prevention diode 135 has a cathode connected to the oil pressure warning lamp 107, the coolant temperature warning lamp 110, the FI warning lamp 112, and the neutral lamp 109 provided as the respective LEDs 118 in parallel relation through current-limiting resistors 136. Resistors 137 and noise-prevention capacitors 138 are connected respectively parallel to the oil pressure warning lamp 107, the coolant temperature warning lamp 110, the FI warning lamp 112, and the neutral lamp 109.

The coolant temperature warning lamp 110 and the FI warning lamp 112 are connected respectively through backflow prevention diodes 140 to the collector of a transistor of a coolant meter 139 and the collector of a transistor of the FI unit 111, the transistors being energized in the event of a failure. The oil pressure warning lamp 107 is connected through a backflow prevention diode 140 to the oil pressure switch 141 which is turned on in the event of a failure. The neutral lamp 109 is connected through a backflow prevention diode 140 to a neutral switch 144 which is turned on when the transmission is in the neutral gear position.

The backflow prevention diodes 140 which are connected to the respective cathodes of the oil pressure warning lamp 107, the coolant temperature warning lamp 110, the FI warning lamp 112, and the neutral lamp 109 have respective cathodes connected respectively to an oil pressure switch connection terminal 145, a coolant temperature connection terminal 146, an FI connection terminal 147, and a neutral switch connection terminal 148 of the pilot box 104. The FI unit 111 is connected to a junction between the neutral switch connection terminal 148 and the neutral switch 144.

A right turn switch 149, a left turn switch 150, and a high beam switch 151 are connected parallel to each other between the fuse 134 and the lamp power terminal IGN+1. The right turn signal lamp 105, the left turn signal lamp 105, and the high beam warning lamp 108 provided as the respective LEDs 118 are connected through respective current limiting resistors 136 respectively to the right turn switch 149, the left turn switch 150, and the high beam switch 151. A right turn switch connection terminal 152, a left turn switch connection terminal 153, and a high beam switch connection terminal 154 of the pilot box 104 are connected between the right turn switch 149, the left turn switch 150, and the high beam switch 151 and the respective current limiting resistors 136.

The left front (and rear) winkers 36a, the right front (and rear) winkers 36b, and the headlights (high beam bulbs) 35 are connected to the right turn switch 149, the left turn switch 150, and the high beam switch 151, respectively. Resistors 137 and noise-prevention capacitors 138 are connected respectively parallel to the right turn signal lamp 105, the left turn signal lamp 105, and the high beam warning lamp 108.

The backflow prevention diode 135 connected to the lamp power terminal IGN+1 has a cathode connected to the collector of a transistor of the ABS unit 113 through an ABS backflow prevention diode 155, a resistor 156, and an ABS unit connection terminal 157, parallel to the oil pressure warning lamp 107, the coolant temperature warning lamp 110, the FI warning lamp 112, and the neutral lamp 109. The ABS backflow prevention diode 155 has a cathode connected through a current limiting resistor 136 to the ABS warning lamp 106 provided as the LED 118 via a branch short of the resistor 156. A resistor 137 and a noise prevention capacitor 138 are connected parallel to the ABS warning lamp 106.

The ABS warning lamp 106 has a cathode connected to the collector of a lamp transistor 159 whose emitter is grounded via a ground terminal GND 1. The emitter of the lamp transistor 159 is connected to the cathodes of the right turn signal lamp 105, the left turn signal lamp 105, and the high beam warning lamp 108 in parallel relation through respective backflow prevention diodes 140.

A junction between the ABS unit connection terminal 157 and the resistor 156 is connected to the cathode of a zener diode 160 whose anode is connected to the base of the lamp transistor 159 through a resistor 161. A resistor 162 and a capacitor 163 are grounded via branches short of the collector of the lamp transistor 159.
The emitter of a transistor of the ABS unit 113 is normally high in level. In the event of a failure of the ABS unit 113, the emitter of the transistor of the ABS unit 113 goes low, making the zener diode 160 high in level. When the reverse voltage of the zener diode 160 exceeds the zener voltage, the lamp transistor 159 is turned on. The ABS warning lamp 106 is energized to indicate the failure of the ABS unit 113.

A meter power terminal IGN+2 of the pilot box 104 for supplying electric power to the meter unit 37 is connected via a branch between the lamp power terminal IGN+1 and the oil pressure warning lamp 107, the coolant temperature warning lamp 110, the FI warning lamp 112, the neutral lamp 109, and the ABS warning lamp 106, or specifically between the lamp power terminal IGN+1 and the diode 135. The lamps are supplied with electric power from the connector joint 87 of the meter unit 37 via the meter power terminal IGN+2.

A meter ground terminal GND2 for grounding the meter unit 37 is connected via a branch between the ABS warning lamp 106, the left turn signal lamp 105, right turn signal lamp 105, and the high beam warning lamp 108, and the ground terminal GND1, or specifically between the cathodes of the backflow prevention diodes 140 of these lamps 105, 108 and the ground terminal GND1. The lamps are grounded from the connector joint 87 of the meter unit 37 via the meter ground terminal GND2.

The lamp power terminal IGN+1, the meter power terminal IGN+2, the oil pressure switch connection terminal 145, the coolant temperature connection terminal 146, the FI connection terminal 147, the ABS unit connection terminal 157, the neutral switch connection terminal 148, the right turn switch connection terminal 152, the left turn switch connection terminal 153, the high beam switch connection terminal 154, the ground terminal GND1, and the meter ground terminal GND2 jointly make up the connector joint 123 of the pilot box 104.

The lamp power terminal IGN+1 and the ground terminal GND1 are disposed respectively on both ends of the connector joint 123 of the pilot box 104. Even if one of the left and right ends of the connector joint 123 is cut off, either one of the power side and the ground side is not connected, and such a state is reflected in the power supply and illumination of the meter unit 37.
Therefore, a connection failure can be recognized early in a stage before the connector joint 123 of the pilot box 104 is completely disconnected.

According to the above embodiment, the pilot box 104 is mounted on the meter panel 90 separately from the meter unit 37, and the meter unit 37 is energized and grounded via the pilot box 104. The power supply and the grounding for the meter unit 37 is established in this manner.
A connection failure of the pilot box 104 due to the fact that the pilot box 104 is not integrally combined with the meter unit 37 can be confirmed by indications and characters on the meter unit 37. Accordingly, a connection failure of the pilot box 104 can quickly be recognized in a situation where the pilot box 104 is positioned separately from the meter unit 37.

When signals are sent from the oil pressure switch 141, the coolant meter 139, the FI unit 111, the ABS unit 113, the neutral switch 144, the right turn switch 149, the left turn switch 150, and the high beam switch 151, the oil pressure warning lamp 107, the coolant temperature warning lamp 110, the FI warning lamp 112, the ABS warning lamp 106, the neutral lamp 109, the turn signal lamp 105, and the high beam warning lamp 108 are energized, allowing the rider of the motorcycle 1 to recognize that a failure has occurred, or the headlights are in a high beam mode, or the front (and rear) winkers 36a, 36b are turned on, by concentrating attention on the pilot box 104. Since the printed-circuit board 117 of the pilot box 104 is coated with the black coat layer 119, the area surrounding the LEDs 118 is less visible from outside the pilot box 104, giving the pilot box 104 a high-quality appearance. The black coat layer 119 is effective to reduce sunlight reflections from the printed-circuit board 117, so that the warning lamps can easily be recognized when they are energized and de-energized.

If the oil pressure warning lamp 107, the coolant temperature warning lamp 110, the FI warning lamp 112, the ABS warning lamp 106, and the neutral lamp 109 are not supplied with electric power due to a connection failure of the lamp power terminal IGN+1, then when the turn signal lamp 105 and the high beam warning lamp 108 are not supplied with electric power as they are not grounded due to a connection failure of the ground terminal GND1, it is impossible to prompt the rider of the motorcycle 1 by turning on the oil pressure warning lamp 107, the coolant temperature warning lamp 110, the FI warning lamp 112, the ABS warning lamp 106, the neutral lamp 109, the turn signal lamp 105, and the high beam warning lamp 108.
In this case, however, since the meter power terminal IGN+2 is not supplied with electric power and the meter ground terminal GND2 is not grounded, the meter unit 37 is not supplied with electric power. As the electric meters are not displayed, the rider of the motorcycle 1 can confirm the lamp failure of the pilot box 104 through the meter unit 37.

Therefore, the rider of the motorcycle 1 can quickly confirm the fact that the oil pressure warning lamp 107, the coolant temperature warning lamp 110, the FI warning lamp 112, the ABS warning lamp 106, the neutral lamp 109, the turn signal lamp 105, and the high beam warning lamp 108 are not supplied with electric power from the battery 132.
The above circuit countermeasure against connection failures is preferable on motorcycles which tend to be subject to more vibrations than four-wheeled vehicles.

A specific example will be described below with respect to the ABS warning lamp 106 for example. When it is not known whether a de-energization of the ABS warning lamp 106 means that the ABS unit 113 is free of a failure or that the ABS warning lamp 106 is not supplied with electric power, the rider of the motorcycle 1 can recognize at a glance that the ABS warning lamp 106 is not supplied with electric power or is not appropriately grounded, by quickly confirming that at least the meter unit 37 is not displaying any indications and characters. Consequently, the rider of the motorcycle 1 can quickly recognize whether a connection failure is responsible or not by confirming the connection of the lamp power terminal IGN+1 and the ground terminal GND1.

The rider of the motorcycle 1 can simply confirm connection failures because connection failures of the lamp power terminal IGN+1 and the ground terminal GND1 of the oil pressure warning lamp 107, the coolant temperature warning lamp 110, the FI warning lamp 112, the ABS warning lamp 106, the neutral lamp 109, the turn signal lamp 105, and the high beam warning lamp 108 can be known by confirming indications and characters displayed on the meter unit 37 which is most appealing to the eye.
The present invention is not limited to the above embodiment, but is applicable to not only motorcycles but also four-wheeled vehicles.
1: Motorcycle (vehicle)
37: Meter unit (meter)
81: Tachometer
82: Speedometer
83: Clock (liquid-crystal meter)
84: Mileage meter (liquid-crystal meter)
85: Tripmeter (liquid-crystal meter)
90: Meter panel
104: Pilot box
105: Turn signal lamp
106: ABS warning lamp
107: Oil pressure warning lamp
108: High beam warning lamp
109: Neutral lamp
110: Coolant temperature warning lamp
111: FI unit (state detecting device)
112: FI warning lamp
113: ABS unit (state detecting device, antilock brake system)
117: Printed-circuit board
118: LED
119: Black coat layer
139: Coolant meter (state detecting device)
141: Oil pressure switch (state detecting device)
144: Neutral switch (state detecting device)
145: Oil pressure switch connection terminal (detecting device connection terminal)
146: Coolant temperature connection terminal (detecting device connection terminal)
147: FI connection terminal (detecting device connection terminal)
148: Neutral switch connection terminal (detecting device connection terminal)
149: Right turn switch (state detecting device)
150: Left turn switch (state detecting device)
151: High beam switch (state detecting device)
152: Right turn switch connection terminal (detecting device connection terminal)
153: Left turn switch connection terminal (detecting device connection terminal)
154: High beam switch connection terminal (detecting device connection terminal)
157: ABS unit connection terminal (detecting device connection terminal)
IGN+1: Lamp power terminal
IGN+2: Meter power terminal
GND1: Ground terminal
GND2: Meter ground terminal

## Claims

1. A warning lamp device for a vehicle having a warning lamp (107, 110, 112, 106, 109, 105, 108) for detecting a state of a vehicle (1) and giving a warning when necessary, **characterized in that** said warning lamp is disposed separately from a meter (37), a warning lamp power terminal (IGN+1) for supplying electric power to said warning lamp, and a meter power terminal (IGN+2), connected between the warning lamp power terminal and said warning lamp, for supplying electric power to said meter, are provided, and said meter is supplied with electric power through said meter power terminal.

2. The warning lamp device for a vehicle according to claim 1, wherein said warning lamp is combined with a ground terminal (GND1) and a meter ground terminal (GND2), connected between said ground terminal and said warning lamp, for grounding said meter, said meter being grounded through said meter ground terminal.

3. The warning lamp device for a vehicle according to claim 1, wherein said warning lamp is combined with a detecting device connection terminal (145, 146, 147, 157, 148, 152, 153, 154) connected to a state detecting device (141, 139, 111, 113, 144, 149, 150, 151) for detecting a state of the vehicle through said warning lamp.

4. The warning lamp device for a vehicle according to any one of claims 1 through 3, comprising a pilot box housing a plurality of warning lamps therein.

5. The warning lamp device for a vehicle according to any one of claims 1 through 4, wherein said warning lamp comprises an ABS warning lamp (106) for producing a warning with respect to an antilock brake system (113) of the vehicle.

6. The warning lamp device for a vehicle according to any one of claims 1 through 5, wherein said warning lamp comprises a warning lamp for producing a warning with respect to an engine operating state of the vehicle including an engine oil pressure, an engine coolant temperature, a fuel injection device, or the like.

7. The warning lamp device for a vehicle according to any one of claims 1 through 6, wherein said meter comprises at least one of an electric speedometer (82), an electric tachometer (81), and a liquid-crystal meter (83, 84, 85).

8. The warning lamp device for a vehicle according to claims 1 to 7, wherein said meter is mounted on a meter panel (90), and said pilot box is disposed on an upper end of a front portion of said meter panel separately from said meter.

9. The warning lamp device for a vehicle according to any one of claims 1 through 8, wherein said warning lamp comprises an LED (118) mounted on a printed-circuit board (117), and said printed-circuit board is coated with a black coat layer (119).

## Patentansprüche

1. Warnlampenvorrichtung für ein Fahrzeug, wobei die Warnlampenvorrichtung eine Warnlampe (107, 110, 112, 106, 109, 105, 108) zum Erfassen eines Zustands eines Fahrzeugs (1) hat und wenn nötig eine Warnung abgibt,
**dadurch gekennzeichnet,**
**dass** die Warnlampe getrennt von einem Anzeigeninstrument (37) angeordnet ist, ein Warnlampenenergieanschluss (IGN+1) zum Zuführen elektrischer Energie zu der Warnlampe und ein Anzeigeninstrument-Energieanschluss (IGN+2), der zwischen dem Warnlampenenergieanschluss und der Warnlampe verbunden ist, um dem Anzeigeninstrument elektrische Energie zuzuführen, vorgesehen sind, und das Anzeigeninstrument mit elektrischer Energie über den Anzeigeninstrument-Energieanschluss versorgt ist.

2. Warnlampenvorrichtung für ein Fahrzeug nach Anspruch 1, wobei die Warnlampe mit einem Masseanschluss (GND1) und einem Anzeigeninstrument-Masseanschluss (GND2) kombiniert ist, der zwischen dem Masseanschluss und der Warnlampe verbunden ist, um das Anzeigeinstrument zu erden, wobei das Anzeigeinstrument über den Anzeigeinstrument-Masseanschluss geerdet ist.

3. Warnlampenvorrichtung für ein Fahrzeug gemäß Anspruch 1, wobei die Warnlampe mit einem Erfassungsvorrichtungsanschluss (145, 146, 147, 157, 148, 152, 153, 154) kombiniert ist, der mit einer Zustandserfassungsvorrichtung (141, 139, 111, 113, 144, 149, 150, 151) verbunden ist, um einen Zustand des Fahrzeugs über die Warnlampe zu erfassen.

4. Warnlampenvorrichtung für ein Fahrzeug gemäß einem der Ansprüche 1 bis 3, die ein Fahrzeugführergehäuse aufweist, das eine Mehrzahl von Warnlampen darin aufnimmt.

5. Warnlampenvorrichtung für ein Fahrzeug gemäß einem der Ansprüche 1 bis 4, wobei die Warnlampe eine ABS-Warnlampe (106) zum Erzeugen einer Warnung in Hinblick auf ein Antiblockierbremssystem (113) des Fahrzeugs erzeugt.

6. Warnlampenvorrichtung für ein Fahrzeug gemäß einem der Ansprüche 1 bis 5, wobei die Warnlampe eine Warnlampe zum Erzeugen einer Warnung im Hinblick auf einen Motorbetriebszustand des Fahrzeugs aufweist, einschließlich eines Motoröldrucks, einer Motorkühlmitteltemperatur, einer Benzineinspritzvorrichtung oder ähnlich.

7. Warnlampenvorrichtung für ein Fahrzeug gemäß einem der Ansprüche 1 bis 6, wobei das Anzeigeinstrument wenigstens eines von einem elektrischen Geschwindigkeitsanzeiger (82), eines elektrischen Tachometers (81) und einem Flüssigkristallanzeigeninstrument (83, 84, 85) aufweist.

8. Warnlampenvorrichtung für ein Fahrzeug gemäß einem der Ansprüche 1 bis 7, wobei das Anzeigeninstrument auf einer Anzeigeninstrumententafel (90) befestigt ist und das Fahrzeugführerbehältnis an einem oberen Ende eines vorderen Abschnitts der Anzeigeninstrumententafel getrennt von dem Anzeigeninstrument angeordnet ist.

9. Warnlampenvorrichtung für ein Fahrzeug gemäß einem der Ansprüche 1 bis 8, wobei die Warnlampe eine LED (118) aufweist, die auf einer gedruckten Leiterplatte (117) montiert ist und die gedruckte Leiterplatte mit einem Schwarzschichtfilm (119) beschichtet ist.

## Revendications

1. Dispositif de lampe témoin pour un véhicule comportant une lampe témoin (107, 110, 112, 106, 109, 105, 108) permettant de détecter un état d'un véhicule (1) et donnant un avertissement au besoin, **caractérisé en ce que** ladite lampe témoin est disposée séparément d'un compteur (37), une borne d'alimentation de lampe témoin (IGN+1) permettant d'alimenter en électricité ladite lampe témoin, et une borne d'alimentation de compteur (IGN+2), connectée entre la borne d'alimentation de lampe témoin et ladite lampe témoin, pour alimenter en électricité ledit compteur, sont prévues, et ledit compteur est alimenté en électricité par l'intermédiaire de ladite borne d'alimentation de compteur.

2. Dispositif de lampe témoin pour un véhicule selon la revendication 1, dans lequel ladite lampe témoin est combinée avec une borne de masse (GND1) et une borne de masse de compteur (GND2), connectée entre ladite bonne de masse et ladite lampe témoin, pour mettre à la masse ledit compteur, ledit compteur étant mis à la masse par l'intermédiaire de ladite borne de masse de compteur.

3. Dispositif de lampe témoin pour un véhicule selon la revendication 1, dans lequel ladite lampe témoin est combinée avec une borne de connexion de dispositif de détection (145, 146, 147, 157, 148, 152, 153, 154) connectée à un dispositif de détection d'état (141, 139, 111, 113, 144, 149, 150, 151) permettant de détecter un état du véhicule par l'intermédiaire de ladite lampe témoin.

4. Dispositif de lampe témoin pour un véhicule selon l'une quelconque des revendications 1 à 3, comprenant un boîtier pilote logeant une pluralité de lampes témoins à l'intérieur.

5. Dispositif de lampe témoin pour un véhicule selon l'une quelconque des revendications 1 à 4, dans lequel ladite lampe témoin comprend une lampe témoin ABS (106) permettant de produire un avertissement relatif à un système de frein antiblocage (113) du véhicule.

6. Dispositif de lampe témoin pour un véhicule selon l'une quelconque des revendications 1 à 5, dans lequel ladite lampe témoin comprend une lampe témoin permettant de produire un avertissement relatif à un état de fonctionnement de moteur du véhicule incluant une pression d'huile de moteur, une température de fluide de refroidissement de moteur, un dispositif d'injection de carburant ou similaire.

7. Dispositif de lampe témoin pour un véhicule selon l'une quelconque des revendications 1 à 6, dans lequel ledit compteur comprend au moins l'un d'un compteur de vitesse électrique (82), d'un compte-tours électrique (81) et d'un compteur à cristaux liquides (83, 84, 85).

8. Dispositif de lampe témoin pour un véhicule selon les revendications 1 à 7, dans lequel ledit compteur est monté sur un panneau de compteur (90), et ledit boîtier pilote est disposé sur une extrémité supérieure d'une portion avant dudit panneau de compteur séparément dudit compteur.

9. Dispositif de lampe témoin pour un véhicule selon l'une quelconque des revendications 1 à 8, dans lequel ladite lampe témoin comprend une DEL (118) montée sur une carte de circuit imprimé (117) et ladite carte de circuit imprimé est revêtue d'une couche de revêtement noir (119).
